# EUROPÄISCHE PATENTSCHRIFT

(11) **EP 3 973 363 B1**
(45) Veröffentlichungstag und Bekanntmachung des Hinweises auf die Patenterteilung: **21.06.2023**
(21) Anmeldenummer: 20723265.3
(22) Anmeldetag: 27.04.2020
(51) Int. Cl.: G05B 19/042, G06F 8/34

(54) **COMPUTERIMPLEMENTIERTES VERFAHREN ZUR RECHNERGESTÜTZTEN ERZEUGUNG EINES AUSFÜHRBAREN STEUERUNGSPROGRAMMS ZUR STEUERUNG UND/ODER REGELUNG EINES TECHNISCHEN PROZESSES**
COMPUTER-IMPLEMENTED METHOD FOR COMPUTER-AIDED GENERATION OF AN EXECUTABLE CONTROL PROGRAM FOR THE CONTROL AND/OR REGULATION OF A TECHNICAL PROCESS
PROCÉDÉ MIS EN OEUVRE PAR ORDINATEUR POUR LA GÉNÉRATION ASSISTÉE PAR ORDINATEUR D'UN PROGRAMME DE COMMANDE EXÉCUTABLE POUR LA COMMANDE ET/OU LA RÉGULATION D'UN PROCESSUS TECHNIQUE

(30) Priorität: 20.05.2019 AT 504582019
(43) Veröffentlichungstag der Anmeldung: 30.03.2022
(73) Patentinhaber: Gruber, Markus, 8561 Söding (AT)
(72) Erfinder: Gruber, Markus, 8561 Söding (AT)
(74) Vertreter: Schwarz & Partner Patentanwälte GmbH
(86) Internationale Anmeldenummer: PCT/AT2020/060169
(87) Internationale Veröffentlichungsnummer: WO 2020/232486

(56) Entgegenhaltungen:
- US-A- 5 301 100
- US-A1- 2011 230 983
- US-A1- 2015 018 977

## Beschreibung

Die Erfindung betrifft ein computerimplementiertes Verfahren zur rechnergestützten Erzeugung eines ausführbaren Steuerungsprogramms zur Steuerung und/oder Regelung eines technischen Prozesses bei dem die Funktionalität des Steuerungsprogramms anhand von Zuständen, Eingangssignalen und Ausgangssignalen mittels einer Bedienoberfläche festgelegt und anschließend in ausführbaren Programmcode umgesetzt wird.

Zur Steuerung oder Regelung eines technischen Prozesses in beispielsweise einer Produktionsanlage werden Systemrechner eingesetzt, denen eine Vielzahl an Eingangssignalen zugeführt werden. So ein Eingangssignal für den Systemrechner kann beispielsweise von einem Positionssensor kommen, der die Position eines Kolbens in einem Zylinder überwacht, oder von einem Temperatursensor, der die Temperatur einer Flüssigkeit in einem Behälter überwacht, oder einem Zeitgeber, der die Dauer der Trocknungszeit eines Produkts vorgibt. Ein technischer Prozess weist eine Vielzahl von Eingangssignalen, Ausgangssignalen, Zuständen und Fehlerbedingungen als Prozessvariablen auf, wobei bereits ein sehr einfacher technischer Prozess durch eine Mehrzahl dieser Prozessvariablen beeinflusst wird. Umso mehr technische Komponenten durch einen technischen Prozess gesteuert oder geregelt werden müssen, umso größer wird die Anzahl der Prozessvariablen, die der technische Prozess aufweist. Betrachtet man beispielsweise eine Raffinerie zur Herstellung von Benzin, dann wird unmittelbar klar wie viele Eingangssignale und Ausgangssignale die einzelnen technischen Komponenten der Raffinerie aufweisen und wie viele Zustände sie einnehmen können, wobei sich aus der Kombination aller Möglichkeiten dieser Prozessvariablen die beinahe unüberschaubar große Anzahl an geplanten und ungeplanten Abläufen des technischen Prozesses zur Herstellung von Benzin ergeben.

DE 10 2015 109 662 A1 offenbart so ein Verfahren zur rechnergestützten Erzeugung eines ausführbaren Steuerungsprogramms, bei dem die Funktionalität des Steuerungsprogramms von einem Techniker mit einer grafischen Benutzeroberfläche festgelegt wird. Blöcke in einem Blockschaltbild kennzeichnen die Zustände und Signallinien die Übergänge von einem Zustand des technischen Prozesses in den nächsten Zustand. Da so eine grafische Benutzeroberfläche bereits bei einfachen technischen Prozessen unübersichtlich wird, beschreibt dieser Stand der Technik die Zergliederung des grafischen Modells des Steuerungsprogramms in Submodelle. Durch diese Zergliederung der grafischen Benutzeroberfläche geht jedoch viel an Übersichtlichkeit verloren. Als weiterer Nachteil dieses bekannten Verfahrens hat sich ergeben, dass es bei der Abarbeitung des mit dem Verfahren erzeugten Steuerungsprogramms zur Steuerung oder Regelung des technischen Prozesses zu unerwarteten Fehlerzuständen gekommen ist, die zu Ausfällen des technischen Prozesses und folglich zu Ausfällen in der Produktion geführt haben.

EP 0 707 248 A1 offenbart ein weiteres Verfahren zur rechnergestützten Erzeugung eines ausführbaren Steuerungsprogramms, bei dem ebenfalls eine grafische Benutzeroberfläche zur Festlegung der Funktionalität des technischen Prozesses zur Anwendung kommt. Um die Komplexität der grafischen Benutzeroberfläche zu reduzieren werden mittels Programmattributen bestimmte Gruppen der grafischen Objekte einer "Sicht" zugeordnet, wobei durch Aktivieren oder Deaktivieren des jeweiligen Programm attributs die Gruppe der grafischen Objekte ein- oder ausgeblendet werden kann. Eine klassische zeilen-/tabellenartige Darstellung der Benutzeroberfläche wird als nachteilig erwähnt, da diese angeblich zu wenig Übersichtlichkeit ermöglicht. Als weiterer Nachteil hat sich auch bei diesem Verfahren ergeben, dass es bei der Abarbeitung des mit dem Verfahren erzeugten Steuerungsprogramms zur Steuerung oder Regelung des technischen Prozesses zu unerwarteten Fehlerzuständen gekommen ist, die zu Ausfällen des technischen Prozesses und folglich zu Ausfällen in der Produktion geführt haben.

US 2015/0018977 A1 offenbart ein weiteres Verfahren zur rechnergestützten Erzeugung eines ausführbaren Steuerungsprogramms, bei dem Zustände und Zustandsübergänge gemäß einer Tabelle festgelegt werden. Das bekannte Verfahren beschreibt allerdings nur ausgewählte Zustände und ermöglicht keine lückenlose Überwachung von Fehlerzuständen, was nachteilig ist. Weiters kommt es bei einer größeren Anzahl an Eingangssignalen zu einem dem Fachmann bekannten *"state explosion problem",* wie mit der unüberblickbar großen Anzahl an möglichen Zuständen des Systems umzugehen ist.

Es ist die Aufgabe der vorliegenden Erfindung ein computerimplementiertes Verfahren zur rechnergestützten Erzeugung eines ausführbaren Steuerungsprogramms zur Steuerung und/oder Regelung eines technischen Prozesses zu schaffen, welches die Nachteile des Standes der Technik vermeidet.

Erfindungsgemäß wird die vorliegende Aufgabe durch die Verfahrensschritte des Verfahrens gemäß Anspruch 1 gelöst.

Die Erfindung basiert auf der Erkenntnis, dass bei den bekannten Verfahren die benutzten Bedienoberflächen zur Beschreibung des technischen Prozesses den zu steuernden oder zu regelnden Prozess nicht zur Gänze mit all seinen unterschiedlichen Zuständen und allen Möglichkeiten an Kombinationen der Eingangssignale beschreiben. Die bekannten Bedienoberflächen sind geeignet Zustände und auch Zustandsübergänge des wie geplant ablaufenden technischen Prozesses und auch bestimmte definierte Fehlerzustände zu beschreiben, aber es verbleiben immer Kombinationen an Eingangssignalen oder Abfolgen von Zuständen, die nicht berücksichtigt werden. Oftmals ist der Grund, dass der den technischen Prozess festlegende Techniker davon überzeugt ist, dass es zu diesem Zustand oder dieser Kombination der Eingangssignale unmöglich kommen kann. Sobald der technische Prozess mehr als einige wenige technische Komponenten aufweist ist zumeist der Grund, dass die Bedienoberfläche keinerlei Hilfestellung liefert sämtlich mögliche Kombinationen definiert abzuarbeiten.

Die Erfindung löst diese Problematik dadurch, dass in jedem definierten Zustand jedes Eingangssignal entsprechend der Festlegung in einer Eingabetabelle entweder ständig bezüglich eines Signalwechsels oder einer Fehlerbedingung überwacht wird oder als beliebig festgelegt und folglich nicht überwacht wird. Hierdurch wird jede Abweichung des technischen Prozesses unmittelbar erkannt. Zusätzlich ermöglicht die erfindungsgemäße Struktur der Eingangstabelle zur vollständigen Beschreibung des technischen Prozesses eine strukturierte Festlegung aller Zustände und Zustandsübergänge, wodurch verhindert wird, dass bestimmte Eingangssignalkombinationen nicht vorab bedacht und im laufenden Prozess dann zu einem Ausfall in der Produktion führen, was durch eine Kontrolltabelle verifiziert werden kann. Durch diese neuartige Verknüpfung technischer Parameter in der Eingangstabelle, die sämtliche Informationen gesammelt für einen Code-Generator zur Erzeugung des Steuerungsprogramms zur Steuerung des technischen Prozesses enthält wird die technische Aufgabe zur Reduktion von Stillständen von Produktionsprozessen gelöst, wodurch die Technizität der Erfindung gegeben ist.

Weitere vorteilhafte Ausgestaltungen des erfindungsgemäßen Verfahrens werden nachfolgend anhand der Figuren erläutert.
Figur 1 zeigt die technischen Komponenten eines durch ein Steuerprogramm gesteuerten technischen Prozesses gemäß einem ersten Ausführungsbeispiel der Erfindung.
Figur 2 zeigt die erfindungsgemäßen Schritte zur vollständigen Beschreibung des technischen Prozesses in einer Eingabetabelle durch Eingaben eines Benutzers.
Figur 3 zeigt eine Arbeitstabelle, die zumindest teilweise an Anzeigemitteln angezeigt und aus der Eingabetabelle befüllt wird.
Figur 4 zeigt eine Kontrolltabelle, die zur Kontrolle der vollständigen Beschreibung des technischen Prozesses durch die Eingabetabelle und die Arbeitstabelle ebenfalls an den Anzeigemitteln anzeigbar ist.

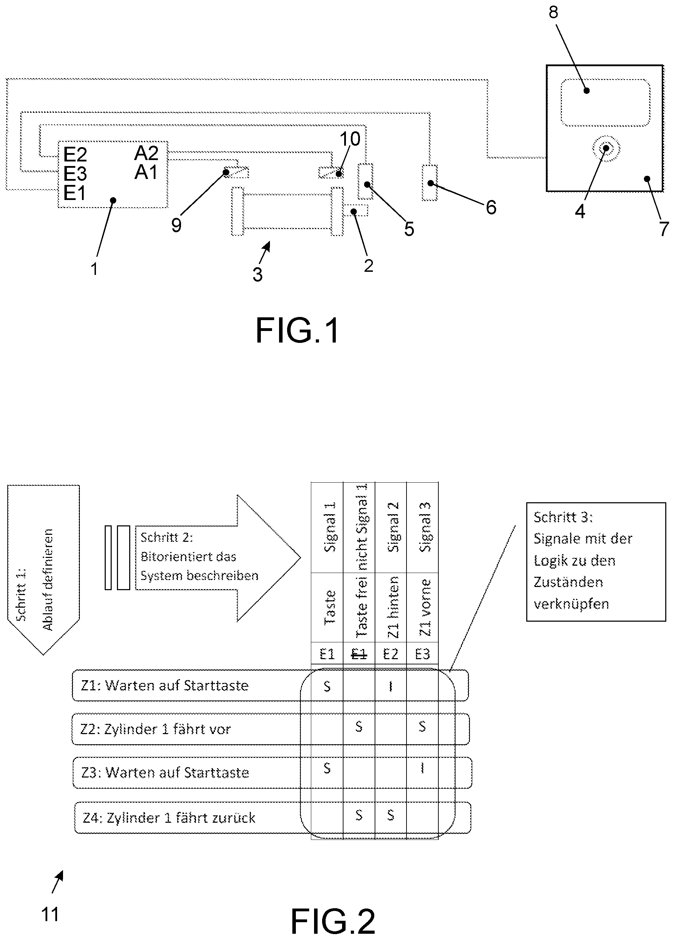

Figur 1 zeigt die technischen Komponenten eines durch ein Steuerprogramm gesteuerten technischen Prozesses gemäß einem ersten Ausführungsbeispiel der Erfindung. Ein Steuerrechner 1 ist zum Abarbeiten des Steuerungsprogramms ausgebildet, um einen Kolben 2 eines Zylinders 3 von einer Position "hinten" auf eine Position "vorne" und umgekehrt zu bewegen. Wenn die Taste 4 gedrückt wird, dann gibt sie ein erstes Eingangssignal E1 an den Steuerrechner 1 ab. Wenn ein erster Sensor 5 den Kolben 2 in der Position "hinten" detektiert, dann gibt der erste Sensor 5 ein zweites Eingangssignal E2 an den Steuerrechner 1 ab. Wenn ein zweiter Sensor 6 den Kolben 2 in der Position "vorne" detektiert, dann gibt der zweite Sensor 6 ein drittes Eingangssignal E3 an den Steuerrechner 1 ab. Eine Ein/Ausgabeeinheit 7 weist eine Anzeige 8, die Taste 4 und weitere nicht dargestellte Tasten zur Eingabe von Informationen auf. Der Steuerrechner 1 gibt ein Ausgangssignal A1 an ein erstes Ventil 9 ab, um den Kolben 2 von Position "hinten" auf Position "vorne" zu verstellen. Der Steuerrechner 1 gibt ein Ausgangssignal A2 an ein zweites Ventil 10 ab, um den Kolben 2 von Position "vorne" auf Position "hinten" zu verstellen.

Der von diesem einfachen nur wenige technische Komponenten aufweisenden System abzuarbeitende Ablauf des technischen Prozesses kann in einem in Worten wie folgt beschrieben werden: Wenn der Kolben 2 auf der Position "hinten" steht und die Taste 4 gedrückt wird, dann gibt der Steuerrechner 1 das Ausgangssignal A1 an das erste Ventil 9 ab, worauf sich der Kolben 2 auf die Position "vorne" bewegt. Wenn der Kolben 2 auf der Position "vorne" steht und die Taste 4 gedrückt wird, dann gibt der Steuerrechner 1 das Ausgangssignal A2 an das zweite Ventil 10 ab, worauf sich der Kolben 2 auf die Position "hinten" bewegt. Dieser Ablauf des technischen Prozesses in Zuständen Z1 bis Z4 ist der erste Schritt zur vollständigen Beschreibung des Systems, wie dies in Figur 2 dargestellt ist.

Figur 2 zeigt wie in einem zweiten Schritt aus dieser Definition des Ablaufes des technischen Prozesses in einer Eingabetabelle 11 der Ablauf durch Eingaben durch einen Benutzer bitorientiert festgelegt werden kann. Die vier Zustände Z1 bis Z4 des Ablaufs werden in vier Zeilen der Eingabetabelle 11 und die Eingangssignale E1 bis E3 in den Spalten der Eingabetabelle 11 festgehalten. Das inverse erste Eingangssignal wird als weiteres Eingangssignal in einer eigenen Spalte aufgenommen, da ein dauerhaftes Drücken der Taste 4 nicht zu einer unkontrollierten Veränderung der Position des Kolbens 2 von "vorne" nach "hinten" und wieder nach "vorne" führen soll. In einem dritten Schritt des erfindungsgemäßen Verfahrens werden dann die Eingangssignale E1 bis E3 und mit der Logik zu den Zuständen verknüpft.

Hierfür trägt der Benutzer ein "S" in eine Zelle der Eingabetabelle 11 ein, wenn in dem jeweiligen Zustand Z1 bis Z4 ein Signalwechsel S überwacht werden muss. Also beispielsweise im Zustand Z1, wenn auf das Eingangssignal E1 der Taste 4 gewartet wird. Weiters trägt der Benutzer ein "I" in eine Zelle der Eingabetabelle 11 ein, wenn in dem jeweiligen Zustand Z1 bis Z4 das Eingangssignal überwacht werden muss. Also beispielsweise im Zustand Z1, wenn das Eingangssignal E2 das Bit "1" aufweisen muss, um sicherzustellen, dass der Kolben in der Position "hinten" detektiert wird. Allen anderen Zellen, die nicht mit einem "S" oder einem "I" von dem Benutzer befüllt werden, können einen beliebigen Wert aufweisen, also die Eingangssignale E1 bis E3 können in diesen Zuständen sowohl das Bit "0" oder auch das Bit "1" aufweisen ohne, dass es einen Einfluss auf den Ablauf des technischen Prozesses hat. Die Kennzeichnung durch die Buchstaben "S" und "I" ist natürlich nur ein Beispiel einer Eingabemöglichkeit, weshalb beliebige Buchstaben oder Zahlen oder Kennzeichnungen bei der Befüllung der Eingabetabelle 11 durch den Benutzer verwendet werden können.

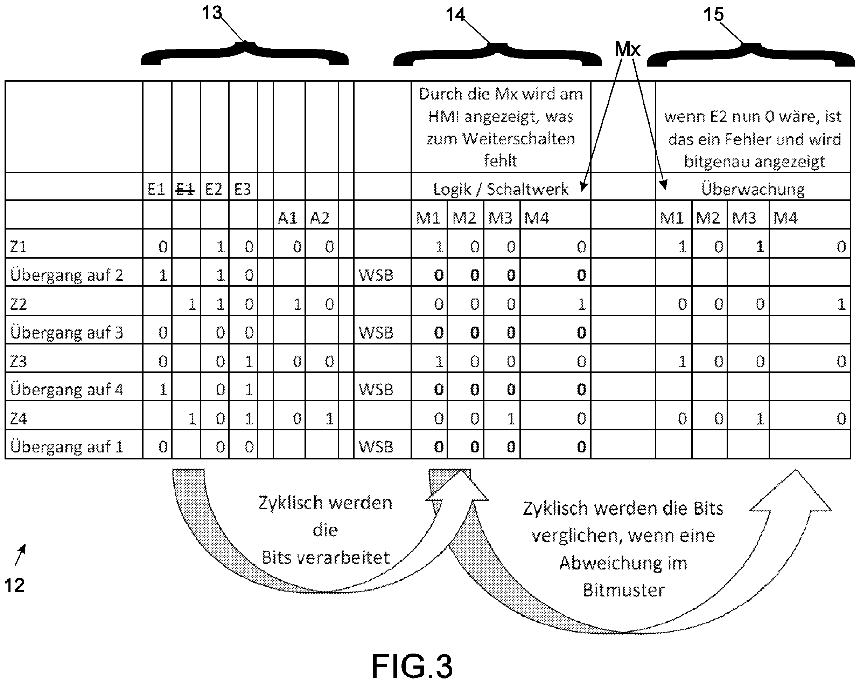

Zur rechnergestützten Erzeugung eines ausführbaren Steuerungsprogramms für den Steuerungsrechner 1, um den vorstehend beschriebenen technischen Prozesses durch den Steuerungsrechner 1 gesteuert ablaufen zu lassen, wird nun durch den Steuerungsrechner 1 oder einen anderen Computer anhand der Eingabetabelle 11 das Steuerungsprogramm erzeugt, dessen Funktion anhand der Arbeitstabelle 12 erkennbar und auch an der Anzeige 8 anzeigbar ist. In einem ersten Abschnitt 13 der in Figur 3 dargestellten Arbeitstabelle 12 sind die vier Zustände Z1 bis Z4 in Zeilen und die Eingangssignale E1 bis E3 und in Spalten enthalten. Gemäß den Eingaben des Benutzers in der Eingabetabelle 11 werden Bits "0" und "1" zur vollständigen Beschreibung der Funktionalität des Steuerungsprogramms in dem ersten Abschnitt 13 der Arbeitstabelle 12 eingefügt, wobei auch Felder des ersten Abschnitts 13 der Arbeitstabelle 12 freigelassen werden, wenn das Eingangssignal gemäß den Eingaben in der Eingabetabelle 11 in diesem Zustand beliebig sein kann.

Figur 3 zeigt wie in der erfindungsgemäßen Arbeitstabelle 12, in der in weiteren vier Zeilen der Arbeitstabelle 12 die Zustandsübergänge von jeweils einem Zustand auf den folgenden Zustand mit aufgenommen wurden. In weiteren Spalten wurden die Ausgangssignale A1 und A2 des Steuerrechners 1 an die Ventile 9 und 10 mit aufgenommen. Dieser erste Abschnitt 13 der Arbeitstabelle 12 beschreibt sämtliche Eingänge E1 bis E3 und sämtliche Ausgänge A1 und A2 der technischen Komponenten des Systems gemäß Figur 1 in allen denkbar möglichen Zuständen des Systems.

In einem zweiten Abschnitt 14 der Arbeitstabelle 12 sind den Zuständen Z1 bis Z4 und den Zustandsübergängen Matrixbits Mx in vier Spalten M1 bis M4 zugeordnet. Die Spalten M1 bis M4 entsprechen den Eingängen E1, E4, E2 und E3, wobei in den Matrixbits Mx jeweils das Bit "1" dargestellt ist, wenn in diesem Zustand auf dieses Eingangssignal gewartet wird, und das Bit "0" dargestellt ist, wenn der Steuerrechner 1 nicht auf dieses Eingangssignal wartet, um auf den nächsten Zustand weiterzuschalten.

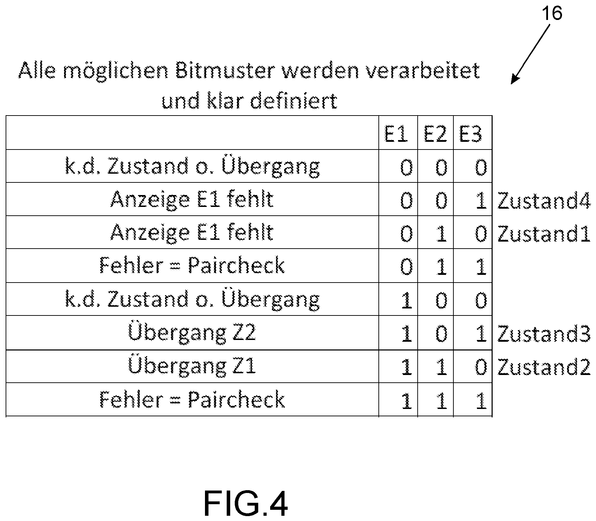

In einem dritten Abschnitt 15 der Arbeitstabelle 12 sind entsprechend den Eingaben des Benutzers in der Eingabetabelle 11 Fehlerzustände festgehalten und werden durch das daraus erzeugte Steuerungsprogramm überwacht, die in dem jeweiligen Zustand oder Zustandsübergang zu einer Fehlermeldung an der Anzeige 8 führen sollen, wenn es bei einem durch das Steuerungsprogramm durchgeführten zyklischen Vergleich der Bits in dem zweiten Abschnitt 14 und dem dritten Abschnitt 15 der Arbeitstabelle 12 zu einer Diskrepanz kommt. Dieser dritte Abschnitt 15 der Arbeitstabelle 12 wird entsprechend den Eingaben des Benutzers in der Eingabetabelle 11 gefüllt und kann unter Zuhilfenahme einer in Figur 4 dargestellten erfindungsgemäßen Kontrolltabelle 16 verifiziert beziehungsweise kontrolliert werden, worauf nachfolgend eingegangen ist.

In der Kontrolltabelle 16 sind alle möglichen Bitkombinationen der drei Eingangssignale E1 bis E3 in Zeilen angeführt, wobei von dem Steuerrechner oder Computer, der das ausführbare Steuerungsprogramm erstellt aus der Eingabetabelle 11 und/oder der Arbeitstabelle 12 zu jeder diese Bitkombinationen angibt, was diese Bitkombination bedeutet. So bedeutet die Bitkombination 1 - 1 - 1, also wenn alle drei Eingangssignale Schaltspannung aufweisen, dass ein Fehlerzustand des Systems vorliegen muss, da der Kolben 2 nicht gleichzeitig vom ersten Sensor 5 in der Position "hinten" und vom zweiten Sensor 6 in der Position "vorne" detektiert werden kann. Der gleiche Fehlerzustand des Systems liegt auch bei der Bitkombination 0 - 1 - 1 vor, da auch bei dieser Bitkombination beide Eingangssignale E2 und E2 Schaltspannung aufweisen. Diese Kontrolltabelle 16 dient dem Benutzer um zu kontrollieren, dass tatsächlich jeder nur möglichen Kombination der Eingangssignale E1 bis E3 auch eine Bedeutung beziehungsweise Verarbeitung zugeordnet wurde. Durch diese lückenlose Überwachung sämtlicher Eingänge des Systems während jedes nur möglichen Zustands oder Zustandsübergangs ist ein besonders zuverlässiges Steuerungsprogramm zur Steuerung und/oder Regelung eines technischen Prozesses erhalten.

Nach dieser vollständigen Beschreibung der Funktionalität des technischen Prozesses durch manuelle Festlegung der Bits in der Eingabetabelle 11 kann die rechnergestützte Erzeugung des ausführbaren Steuerungsprogramms zur Steuerung und/oder Regelung des technischen Prozesses von dem Benutzer gestartet werden. Dem Fachmann ist dieses automatisierte Übersetzen einer durch eine Tabelle oder ein grafisches Modell beschriebenen Prozesses in ein ausführbares Steuerungsprogramm in Maschinensprache oder eine höhere Programmiersprache bekannt, wie dies beispielsweise in der DE 10 2015 109 662 A1 beschrieben ist. Hierauf wird im Rahmen dieser Beschreibung somit nicht näher eingegangen, da die Erfindung im Bereich der lückenlosen tabellarischen Beschreibung des technischen Prozesses liegt. Nach der Erzeugung des ausführbaren Programmcodes wird dieser in den Programmspeicher des Steuerrechners 1 geladen, der technische Prozess in einen definierten Zustand - beispielsweise den Zustand Z1 - gebracht und die Abarbeitung des Steuerprogramms von dem Benutzer gestartet. Teile der von dem Steuerungsrechner 1 oder einem anderen Computer mit der Erzeugung des Steuerungsprogramms auch erzeugten Arbeitstabelle 12 und gegebenenfalls Kontrolltabelle 16 können an der Anzeige 8 zur Information des Benutzers vor, während und auch nach Abarbeitung des technischen Prozesses angezeigt werden.

Im Folgenden wird der Ablauf des technischen Prozesses gesteuert durch den Steuerrechner 1 durch Abarbeitung des anhand der lückenlosen Beschreibung in der Arbeitstabelle 12 und der Kontrolltabelle 16 erzeugten Programmcodes erläutert. Im Zustand 1 befindet sich der Kolben 2 auf der Position "hinten", weshalb im ersten Abschnitt 13 nur das Eingangssignal E2 des ersten Sensors 5 das Bit "1" beziehungsweise Schaltspannung aufweist und im zweiten Abschnitt 14 das Matrixbit M1 das Bit "1" aufweist, da zum Weiterschalten auf Zustand 2 die Betätigung der Taste 4, also das Eingangssignal E1, erwartet wird. Im dritten Abschnitt 15 ist in der ersten Zeile zum Zustand 1 erkennbar, dass das als Font "fett" dargestellte Matrixbit M3 dahingehend überwacht wird, ob es das Bit "1" aufweist. Sollte Bit "0" vorliegen, also das Eingangssignal E2 des ersten Sensors 5 anzeigen, dass der Kolben 2 nicht in der Position "hinten" steht und somit nicht der Zustand 1 vorliegt, dann liegt ein Fehler vor, der mittels Anzeige 8 dem Benutzer angezeigt werden würde. Mit einem Blick auf die an der Anzeige 8 dargestellte Arbeitstabelle 12 kann der Benutzer nun erkennen in welchem Zustand sich der technische Prozess befindet und welcher Sensor ein unerwartetes Sensorsignal als Eingangssignal abgibt. Durch einen Blick auf die tatsächliche Position des Kolbens kann der Fehler des Systems von der Bedienperson leicht erkannt und beispielsweise durch Austausch des ersten Sensors 5 behoben werden.

Weiters wird im ersten Zustand Z1 das im dritten Abschnitt 15 als Font "normal" dargestellte Matrixbit M1 dahingehend überwacht, ob es bereits das Bit "1" aufweist, was ja anzeigt, dass das Eingangssignal E1 durch Drücken der Taste 4 Schaltspannung aufweist. Wenn diese überwachte Weiterschaltbedingung WSB vom Steuerrechner 1 durch die in der Zeile "Übergang auf 2" angegebenen Bits detektiert wird, dann schaltet der Steuerrechner 1 auf den Zustand 2 des Systems weiter und gibt das Ausgangssignal A1 an das erste Ventil 9 abgibt, worauf sich der Kolben 2 auf die Position "vorne" bewegt. Die Weiterschaltbedingung vom Zustand 2 auf den Zustand 3 ist dann erreicht, wenn der Kolben 2 die Position "vorne" erreicht hat und das Eingangssignal E3 Schaltspannung aufweist, was Bit "1" in dem überwachten Matrixbit M4 im dritten Abschnitt 15 des Zustands Z2 entspricht. Im Zustand 3 wird wiederum auf Eingangssignal E1 durch Tastendruck der Taste 4 gewartet, was Bit "1" in dem überwachten Matrixbit M1 im dritten Abschnitt 15 entspricht. Wenn die Taste 4 gedrückt wird, dann schaltet der Steuerrechner auf Zustand 4 weiter und gibt das Ausgangssignal A2 an das zweite Ventil 10 ab, worauf sich der Kolben 2 auf die Position "hinten" bewegt. Sobald der erste Sensor 5 das Eingangssignal E2 den Steuerrechner 1 abgibt, was durch das Bit "1" in dem überwachten Matrixbit M2 im dritten Abschnitt 15 detektiert wird, dann schaltet der Steuerrechner 1 wieder in den Zustand 1, wodurch der gesamte technische Prozess einmal durchlaufen wurde. Die Weiterschaltbedingungen WSB sind immer dadurch gekennzeichnet, dass sämtliche Matrixbits Mx in dem zweiten Abschnitt 14 der Arbeitstabelle 12 das Bit "0" aufweisen. In einer anderen Ausführungsvariante der Erfindung könnte die Weiterschaltbedingung WSB durch sämtliche Matrixbits Mx mit dem Bit "1" gekennzeichnet sein.

Die Kontrolltabelle 16 ermöglicht eine Kontrolle der Vollständigkeit der in die Arbeitstabelle 12 eingetragenen Bits, es wäre aber eine Erstellung der Arbeitstabelle 12 ohne deren Kontrolle durch die Kontrolltabelle 16 auch möglich.

Es kann erwähnt werden, dass die Arbeitstabelle 12 natürlich auch bezüglich Zeilen und Spalten umgekehrt erstellt und verwendet werden könnte. In diesem Fall wären die Zustände Z1 bis Z4 in den Spalten vermerkt und die Eingangssignale E1 bis E3, die Ausgangssignale A1 und A2 und die Matrixbits Mx in den Zeilen angeordnet. Auch mit dieser alternativen Anordnung kann der Vorteil erzielt werden, dass der technische Prozess des Systems vollumfänglich beschrieben wird, um eine rechnergestützte Erzeugung des mit dem Steuerrechner 1 abzuarbeitenden ausführbaren Programmcodes zu ermöglichen. Bei der Abarbeitung des Programmcodes zur Steuerung und/oder Regelung des technischen Prozesses ist somit sichergestellt, dass alle möglichen Kombinationen von Eingangssignalen zu einer festgelegten Verarbeitung führen. Sei es, dass auf den nächsten Zustand der "State Machine" übergegangen wird oder dem Benutzer ein definierter Fehler angezeigt wird, der anhand der Information in der Tabelle eine unmittelbare Lösung ermöglicht.

Das erfindungsgemäße Verfahren wurde vorstehend anhand eines sehr einfachen technischen Prozesses mit nur einem Zylinder 3 und einem Kolben 2, der nur in zwei Positionen verstellbar ist, erläutert. Sein eigentlicher Vorteil zeigt sich bei Anwendung der beschriebenen Vorgangsweise auf einen technischen Prozess mit einer Vielzahlt an unterschiedlichen technischen Einrichtungen, wie dies beispielsweise in einem halb- oder vollautomatischen Produktionsprozess gegeben ist.

## Patentansprüche

1. Computerimplementiertes Verfahren zur rechnergestützten Erzeugung eines ausführbaren Steuerungsprogramms zur Steuerung und/oder Regelung eines technischen Prozesses bei dem folgende Verfahrensschritte durchgeführt werden:
Festlegen der Funktionalität des Steuerungsprogramms anhand von Zuständen (Z1 bis Z4), Eingangssignalen (E1 bis E3) und Ausgangssignalen (A1, A2) mittels einer Bedienoberfläche (7),
Umsetzen der festgelegten Funktionalität des Steuerungsprogramms in einen ausführbaren Programmcode, **dadurch gekennzeichnet, dass** anhand einer mittels der Bedienoberfläche (7) befüllten Eingabetabelle (11) die Funktionalität des Steuerungsprogramms vollständig beschrieben ist, wobei jedem Zustand (Z1 bis Z4) des technischen Prozesses eine Zeile/Spalte der Eingabetabelle (11) und jedem Eingangssignal (E1 bis E3) des technischen Prozesses eine Spalte/Zeile der Eingabetabelle (11) zugeordnet ist, um durch eine Festlegung als:
Signalwechsel (S) erwartet zum Übergang auf den nächsten Zustand oder
Überwacht (I) zur Fehlerdetektion oder
beliebig
in jeder der Zellen der Eingabetabelle (11) den technischen Prozess zur Gänze in der Eingabetabelle (11) zu beschreiben, wobei von dem Programmcode in jedem definierten Zustand jedes Eingangssignal entsprechend der Festlegung in der Eingabetabelle (11) entweder ständig bezüglich eines Signalwechsels oder einer Fehlerbedingung überwacht wird oder als beliebig festgelegt und folglich nicht überwacht wird und wobei bei der rechnergestützten Erzeugung des ausführbaren Steuerungsprogramms aus der Eingabetabelle (11) in einer Kontrolltabelle (16) zu allen möglichen Bitkombinationen der Eingangssignale (E1 bis E3) angegeben wird, welche Bedeutung oder Verarbeitung diesen Bitkombinationen zugeordnet wurde.

2. Verfahren gemäß Anspruch 1, **dadurch gekennzeichnet, dass** bei der Erzeugung des ausführbaren Steuerprogramms aus der Eingabetabelle (11) eine Arbeitstabelle (12) erzeugt wird, in der jedem Zustand (Z1 bis Z4) des technischen Prozesses eine Zeile/Spalte der Arbeitstabelle (12) und jedem Eingangssignal (E1 bis E3) des technischen Prozesses eine Spalte/Zeile in einem ersten Bereich (13) der Arbeitstabelle (12) zugeordnet wird, um durch eine Festlegung der erwarteten Eingangssignale (Mx in 14) zum Übergang auf den nächsten Zustand (Z1 bis Z4) in einem zweiten Bereich (14) der Arbeitstabelle (12) und durch Festlegung der überwachten Eingangssignale (Mx in 15) zur Fehlerdetektion in einem dritten Bereich (15) der Arbeitstabelle (12) den technischen Prozess zur Gänze in der Arbeitstabelle (12) zu beschreiben.

3. Verfahren gemäß Anspruch 2, **dadurch gekennzeichnet, dass** in weiteren zwischen den Zuständen (Z1 bis Z4) angeordneten Zeilen/Spalten der Arbeitstabelle (12) jeweils eine Zeile für den Übergang von einem Zustand auf den darauffolgenden Zustand vorgesehen ist, wobei die erwarteten Eingangssignale (Mx in 14) in diesen Zeilen/Spalten alle das Bit Null oder alle das Bit Eins aufweisen müssen.

4. Verfahren gemäß einem der Ansprüche 2 bis 3, **dadurch gekennzeichnet, dass** jeder möglichen Bitkombination der Eingangssignale (E1 bis E3) in der Kontrolltabelle (16) ein Zustand (Z 1 bis Z4) der Arbeitstabelle (12) oder überwachter Fehler im dritten Bereich (15) der Arbeitstabelle (12) oder Übergänge in der Arbeitstabelle (12) zuordenbar ist, um die vollständige Beschreibung des technischen Prozesses in der Arbeitstabelle (12) zu verifizieren.

5. Verfahren gemäß einem der Ansprüche 2 bis 4, **dadurch gekennzeichnet, dass** bei einer Simulation der Steuerung und/oder Regelung des technischen Prozesses durch das Steuerungsprogramm anhand der Arbeitstabelle (12) mit Anzeigemittel (8) das jeweils nächste Eingangssignal (E1 bis E3 als M1 bis M4) gekennzeichnet wird, das für den Übergang vom aktuellen auf den nächsten Zustand (Z1 bis Z4) erwartet wird.

## Claims

1. A computer-implemented method for the computer-aided generation of an executable control program for controlling and/or regulating a technical process, in which the following method steps are implemented:
defining the functionality of the control program by means of states (Z1 to Z4), input signals (E1 to E3), and output signals (A1, A2) via an operating interface;
converting the determined functionality of the control program into an executable program code, **characterized in that** an input table (11) filled in via the user interface (7) fully describes the control program, wherein each state (Z1 to Z4) of the technical process is assigned a line/column of the input table (11) and each input signal (E1 to E3) of the technical process is assigned a column/line of the input table (11) in order to fully describe the technical process in the input table (11) by defining, in each cell of the input table (11),
signal change (S) waiting for transition to next state, or
monitored (I) for error detection, or
random,
wherein in every defined state, every input signal is, according to the definition in the input table (11), either continuously monitored with regard to a signal change or an error condition, or randomly set and consequently not monitored by the program code, and wherein during the computer-aided creation of the executable control program from the input table (11) a check table (16) provides for all possible bit combinations of input signals (E1 to E3) information on which meaning or processing these bit combinations were assigned.

2. The method of claim 1 **characterized in that**, during the creation of the executable control program from the input table (11), a working table (12) is created, in which every state (Z1 to Z4) of the technical process is assigned a line/column of the working table (12) and every input signal (E1 to E3) of the technical process is assigned a column/line in a first area (13) of the working table (12) in order to fully describe the technical process in the working table (12) by defining the expected input signals (Mx in 14) for the transition to the next state (Z1 to Z4) in a second area (14) of the working table (12) and by defining the monitored input signals (Mx in 15) for error detection in a third area (15) of the working table (12).

3. The method of claim 2 **characterized in that** in further lines/columns of the working table (12) placed between the states (Z1 to Z4), one line each is provided for the transition from one state to the subsequent state, wherein the expected input signals (Mx in 14) must all have the bit zero or all have the bit one in these lines/columns.

4. The method of any one of the claims 2 to 3 **characterized in that** each possible bit combination of input signals (E1 to E3) is assignable, in the control table (16), a state (Z1 to Z4) of the working table (12) or monitored error in the third area (15) of the working table (12) or transitions in the working table (12) in order to verify the full description of the technical process in the working table (12).

5. The method of any one of the claims 2 to 4 **characterized in that** during a simulation of the control and/or regulation of the technical process by the control program based on the working table (12) with display means (8), the respectively next input signal (E1 to E3 as M1 to M4) will be marked that is expected for the transition of the current to the next state (Z 1 to Z4).

## Revendications

1. Procédé mis en oeuvre par ordinateur pour la génération assistée par ordinateur d'un programme de commande exécutable pour la commande et/ou la régulation d'un processus technique lors duquel les étapes de procédé suivantes sont exécutées :
définition de la fonctionnalité du programme de commande sur la base d'états (Z 1 à Z4), de signaux d'entrée (E1 à E3) et de signaux de sortie (A1 et A2) à l'aide d'une interface utilisateur (7) et
conversion de la fonctionnalité définie du programme de commande en un code de programmation exécutable, **caractérisé en ce que** la fonctionnalité du programme de commande est intégralement décrite sur la base d'un tableau d'entrée (11) rempli à l'aide de l'interface utilisateur (7), selon lequel une ligne/colonne du tableau d'entrée (11) est associée à chaque état (Z1 à Z4) du processus technique et une ligne/colonne du tableau d'entrée (11) à chaque signal d'entrée (E1 à E3) du processus technique afin de décrire entièrement le processus technique par une définition comme
"Changement de signal" (S) attendu pour passer à l'état suivant ou comme "Surveillé" (I) pour détecter une erreur ou
arbitraire
dans chacune des cellules du tableau d'entrée (11), selon lequel, dans chaque état défini, chaque signal d'entrée est soit surveillé en permanence par le code de programmation en ce qui concerne son changement de signal ou une condition d'erreur, soit défini comme arbitraire et donc non surveillé, selon la définition dans le tableau d'entrée (11), et selon lequel, lors de la génération assistée par ordinateur du programme de commande exécutable à partir du tableau d'entrée (11) dans un tableau de contrôle (16), il est indiqué pour toutes les combinaisons de bits possibles des signaux d'entrée (E1 à E3) quelle signification ou quel traitement est associé à ces combinaisons de bits.

2. Procédé selon la revendication 1, **caractérisé en ce que**, lors de la génération du programme exécutable à partir du tableau d'entrée (11) est généré un tableau de travail (12), une ligne/colonne du tableau de travail (12) étant associée à chaque état (Z1 à Z4) du processus technique et une colonne/ligne dans une première zone (13) du tableau de travail (12) à chaque signal d'entrée (E1 à E3) du processus technique afin de décrire entièrement le processus technique dans le tableau de travail (12) par une définition des signaux d'entrée attendus (Mx dans 14) pour passer à l'état suivant (Z1 à Z4) dans une deuxième zone (14) du tableau de travail (12) et par une définition des signaux d'entrée surveillés (Mx dans 15) pour détecter les erreurs dans une troisième zone (15) du tableau de travail (12).

3. Procédé selon la revendication 2, **caractérisé en ce que** dans chacune des autres lignes/colonnes du tableau de travail (12) disposées entre les états (Z1 à Z4), il est prévu une ligne pour le passage d'un état à l'état suivant, les signaux d'entrée attendus (Mx dans 14) devant tous présenter dans ces lignes/colonnes le bit 0 ou tous le bit 1.

4. Procédé selon une des revendications 2 à 3, **caractérisé en ce qu'**à chaque combinaison de bits possible des signaux d'entrée (E1 à E3) du tableau de contrôle (16) peut être associé un état (Z1 à Z4) du tableau de travail (12), une erreur surveillée dans la troisième zone (15) du tableau de travail (12) ou des passages dans le tableau de travail (12) pour vérifier la description complète du processus technique dans le tableau de travail (12).

5. Procédé selon une des revendications 2 à 4, **caractérisé en ce que**, lors d'une simulation de la commande et/ou de la régulation du processus technique par le programme de commande à l'aide du tableau de travail (12) avec un moyen d'affichage (8), le signal d'entrée suivant (E1 à E3 comme M1 à M4) qui est attendu pour passer de l'état actuel à l'état suivant (Z1 à Z4) est marqué.
